# EUROPEAN PATENT SPECIFICATION

(11) **EP 4 400 361 B1**
(45) Date of publication and mention of the grant of the patent: **12.08.2026**
(21) Application number: 22945347.7
(22) Date of filing: 10.06.2022
(51) Int. Cl.: B60L 53/80, B60L 53/30, B60L 53/35, B60S 5/06, G01S 1/08, G01S 17/08, G05D 3/12, G06T 7/70, H04W 64/00

(54) **METHOD AND APPARATUS FOR DETECTING POSITION OF BATTERY SWAPPING DEVICE, BATTERY SWAPPING DEVICE, AND BATTERY SWAPPING STATION**
VERFAHREN UND VORRICHTUNG ZUR ERKENNUNG DER POSITION EINER BATTERIEWECHSELVORRICHTUNG, BATTERIEWECHSELVORRICHTUNG UND BATTERIEWECHSELSTATION
PROCÉDÉ ET APPAREIL DE DÉTECTION DE POSITION DE DISPOSITIF DE PERMUTATION DE BATTERIE, DISPOSITIF DE PERMUTATION DE BATTERIE ET STATION DE PERMUTATION DE BATTERIE

(43) Date of publication of application: 17.07.2024
(73) Proprietor: Contemporary Amperex Technology (Hong Kong) Limited, Central, Central And Western District (HK)
(72) Inventor: QUE, Shibiao, Xiamen, Fujian 361001 (CN); CHEN, Can, Xiamen, Fujian 361001 (CN)
(74) Representative: Rowlands, Stuart Michael
(86) International application number: PCT/CN2022/098227
(87) International publication number: WO 2023/236206

(56) References cited:
- CN-A- 106 515 681
- CN-A- 111 301 215
- CN-A- 111 301 215
- CN-A- 111 301 216
- CN-A- 111 343 565
- CN-A- 113 665 404
- CN-A- 113 815 477
- CN-A- 114 347 844
- CN-A- 114 475 340
- CN-A- 114 475 340
- CN-U- 202 401 805
- CN-U- 216 647 558
- US-A1- 2022 144 220

## Description

### Technical Field

The present application relates to the technical field of electric vehicles, and in particular to a method and a device for detecting a position of a battery swap apparatus, a battery swap apparatus, and a battery swap station.

### Background

Saving energy and reducing emissions is key to the sustainable development of automobile industry. As such, electric vehicles have become an important part of the sustainable development of automotive industry due to their advantages of energy efficiency and environmental friendliness. For electric vehicles, charging and swapping technologies for batteries are an important factor related to their development.

Currently, a battery in an electric vehicle can be swapped through a battery swap station in addition to the possibility of charging the battery in the electric vehicle through a charging device to ensure continuous running of the electric vehicle. Energy can be replenished for the electric vehicle with insufficient energy, thereby avoiding affected operation efficiency of the vehicle due to excessive battery charging time. Therefore, how to ensure safety of a battery swap process is still a problem that needs to be solved. CN114475340 relates generally to a battery replacement control method, system, electronic device and computer-readable storage medium that improves the battery replacement efficiency and reduce safety hazards during the battery replacement process. CN111301215A relates generally to a battery replacement control method and system, electronic equipment and a storage medium.

### Summary of the Invention

The invention is defined in the appended claims. Hereafter "embodiment(s)" refer to embodiment(s) of the disclosure.

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. The present application provides a method and a device for detecting a position of a battery swap apparatus, a battery swap apparatus, and a battery swap station, which can ensure that a battery swap operation is performed after the battery swap apparatus runs to an accurate position in a battery swap process, thus ensuring safety of the battery swap process.

In a first aspect, there is provided a method of detecting a position of a battery swap apparatus. The battery swap apparatus is provided with a distance measuring device. The method includes: acquiring, from the distance measuring device, a first distance by which the battery swap apparatus moves; and determining a position of the battery swap apparatus according to the first distance.

With the distance by which the battery swap apparatus moves acquired through the distance measuring device, the distance by which the battery swap apparatus moves can be efficiently and accurately acquired, avoiding the problem of inaccurate recording of the device in the battery swap apparatus that records a travel distance of the battery swap apparatus. Therefore, the detection precision of battery swap apparatus position is improved, such that the battery swap apparatus can carry out a battery swap operation at an accurate position, ensuring safety of a battery swap process.

According to the invention, the battery swap apparatus is further provided with a power transmission device, and the method further includes: acquiring, by means of the power transmission device, a second distance by which the battery swap apparatus moves; and detecting the position of the battery swap apparatus according to the first distance and the second distance.

In the embodiment of the present application, judging the position of the battery swap apparatus by combining the first distance acquired from the distance measuring device and the second distance acquired by means of the power transmission device allows improved precision for battery swap apparatus position detection, enabling the battery swap apparatus to move to a target position more accurately, thereby ensuring the safety of the battery swap process. Also, the power transmission device communicates with a controller in real time to control the battery swap apparatus to stop at a suitable position without measuring, in real time by distance measuring, the distance by which the battery swap apparatus moves, which can also reduce energy consumption.

In some embodiments, the power transmission device includes a motor, the motor is used to drive the battery swap apparatus to move, and that acquiring, by means of the power transmission device, a second distance by which the battery swap apparatus moves includes: determining the second distance by which the battery swap apparatus moves according to the number of rotations of the motor.

With the second distance determined from the motor that drives the battery swap apparatus to move, the second distance can be recorded more accurately. Therefore, the detection precision of battery swap apparatus position is improved, such that the battery swap apparatus can carry out the battery swap operation at the accurate position, ensuring safety of a battery swap process.

In some embodiments, the power transmission device includes an encoder, the encoder is used to determine the second distance, and that acquiring, by means of the power transmission device, a second distance by which the battery swap apparatus moves includes: acquiring, from the encoder, the second distance by which the battery swap apparatus moves.

The encoder may judge whether the battery swap apparatus has moved to a target position by recording the number of rotations of a motor, and send to a controller the second distance by which the battery swap apparatus moves, making it convenient for the controller to judge whether the position of the battery swap apparatus is accurate. This not only allows the distance by which the battery swap apparatus moves, to be more precise, but also helps the controller re-judge the position of the battery swap apparatus, improving the detection precision of battery swap apparatus position. The battery swap apparatus is enabled to carry out the battery swap operation at the accurate position, ensuring the safety of the battery swap process.

In some embodiments, the distance measuring device is a laser type distance measuring device.

The laser type distance measuring device has the advantages of fast response and accurate measurement. Using the laser type distance measuring device to acquire the first distance can further improve battery swap apparatus position detection accuracy, and can also improve positioning efficiency, ensuring the safety of the battery swap process.

In some embodiments, that acquiring, from the distance measuring device, a first distance by which the battery swap apparatus moves includes: with the battery swap apparatus in a first position, acquiring, from the distance measuring device, the first distance by which the battery swap apparatus moves, wherein the first position is a position where the battery swap apparatus is after moving by the second distance from an initial position, and the initial position is a position where the power transmission device starts to calculate the second distance.
the first distance is measured through the distance measuring device after the battery swap apparatus moves to a certain position, which can reduce running time of the distance measuring device and can reduce energy consumption while ensuring measurement precision. Also, the distance by which the battery swap apparatus moves is acquired using two approaches. This helps the controller re-judge the position of the battery swap apparatus, improving the detection precision of battery swap apparatus position. The battery swap apparatus is enabled to carry out the battery swap operation at the accurate position, ensuring the safety of the battery swap process.

In some embodiments, acquiring, from the distance measuring device, a first distance by which the battery swap apparatus moves includes: with the battery swap apparatus in the initial position, acquiring a first reference distance from the distance measuring device; with the battery swap apparatus in the first position, acquiring a second reference distance from the distance measuring device; and determining the first distance according to the first reference distance and the second reference distance.

Determining the first distance by only two measurements can minimize energy consumption on the basis of ensuring accuracy of first distance measurements. Also, measuring the distances between the battery swap apparatus and the reference position with the battery swap apparatus in the initial position and the first position can ensure accuracy of first distance measurement, which facilitates improved detection precision for the position of the battery swap apparatus, enabling the battery swap apparatus to carry out the battery swap operation at the accurate position, and ensuring the safety of the battery swap process.

According to the invention, determining a position of the battery swap apparatus according to the first distance and the second distance includes: calculating a distance difference between the second distance and the first distance; and determining whether the battery swap apparatus is in a target position according to the distance difference.

Re-judging the position of the battery swap apparatus through two distance measuring approaches allows the position of the battery swap apparatus to be determined more accurately, which facilitates timely adjustment of the position of the battery swap apparatus and avoids danger occurrence in the battery swap process due to position errors of the battery swap apparatus, thus enabling the safety of the battery swap process to be ensured.

In some embodiments, that determining whether the battery swap apparatus is in a target position according to the distance difference includes: if a value of the distance difference is less than a first threshold, determining that the battery swap apparatus is in the target position; and if the value of the distance difference is greater than or equal to the first threshold, determining that the battery swap apparatus is not in the target position.

By providing the first threshold, a certain error may be allowed at a time of deciding the position of the battery swap apparatus, avoiding affected production efficiency due to overly fine adjustments of the position of the battery swap apparatus. Also, judging the distance difference between the first distance and the second distance enables whether the battery swap apparatus is in the target position to be judged in time, which helps carry out the battery swap operation after the battery swap apparatus is moved to an accurate position, ensuring the safety of the battery swap process.

In some embodiments, if it is determined that the battery swap apparatus is not in the target position, the method further includes: adjusting the position of the battery swap apparatus according to the distance difference.

If the position which the battery swap apparatus is in is significantly differed from the target position, the battery swap apparatus can automatically adjust its position to move to the target position. This facilitates implementing an automatic control process for the battery swap apparatus, and can also ensure that the battery swap apparatus is in the target position when carrying out a battery swap operation, thereby ensuring the safety of the battery swap process.

In some embodiments, that adjusting the position of the battery swap apparatus according to the distance difference includes: if the distance difference is a positive number, controlling the battery swap apparatus to move by a third distance along a moving direction of the battery swap apparatus; and if the difference is a negative number, controlling the battery swap apparatus to move by the third distance along a moving direction facing away from the battery swap apparatus; wherein the third distance is equal to the value of the distance difference.

In this way, this enables the battery swap apparatus to automatically adjust the position which it is in, facilitates implementing an automatic control process for the battery swap apparatus, and ensures that the battery swap apparatus is in the target position when carrying out a battery swap operation, thereby ensuring the safety of the battery swap process.

In some embodiments, the power transmission device includes a variable frequency drive, the variable frequency drive is used to control a motor, and the motor is used to drive the battery swap apparatus to move.

The variable frequency drive may control multiple types of motors. When parameters of the drive motor need to be adjusted, the motor may be directly replaced without replacing the variable frequency drive at the same time that controls the motor. This enables the battery swap apparatus to be adjusted more conveniently as needed, facilitating lowering of production cost.

In some embodiments, one variable frequency drive is used to control at least two motors.

By controlling at least two motors with one variable frequency drive, it is possible to ensure that the at least two motors run synchronously, thereby ensuring steady movement of the battery swap apparatus when the motors drive the battery swap apparatus to move, avoiding potential safety hazards in a battery swap process due to unsteady movement of the battery swap apparatus, and ensuring the safety of the battery swap process.

In some embodiments, the battery swap apparatus is provided with at least two power transmission mechanisms, and each motor of the at least two motors is used to drive one of the power transmission mechanisms to cause the battery swap apparatus to move.

Providing one motor for each power transmission mechanism and controlling the motor by the same variable frequency drive facilitate unified running of the power transmission mechanisms on the battery swap apparatus. This ensures that the battery swap apparatus can move steadily to a target position during running, and can prevent the problem that when one motor controls multiple power transmission mechanisms, the battery swap apparatus is unsteady during moving since the different power transmission mechanisms take different forces due to the different distances between the motor and the different power transmission mechanisms, ensuring the safety of the battery swap process.

In some embodiments, the motor is disposed on a side of the power transmission mechanism facing away from the battery swap apparatus.

In this way, it may be prevented that the motor blocks movement of other parts of the battery swap apparatus in a first direction, such that the battery swap apparatus can move within a wider range, facilitating smooth progress of the battery swap process and ensuring the safety of the battery swap process.

In some embodiments, the battery swap apparatus includes a first moving mechanism, a second moving mechanism, and a third moving mechanism, and the first moving mechanism, the second moving mechanism, and the third moving mechanism are used to control the battery swap apparatus to move in three mutually perpendicular directions, respectively.

This structure may enable the battery swap apparatus to move within a wider range and be accurately positioned in any direction, which helps ensure that the battery swap apparatus carries out a battery swap operation at an accurate position, thus ensuring the safety of the battery swap process.

In a second aspect, there is provided a battery swap apparatus, including: a distance measuring device, the distance measuring device being used to measure a first distance by which the battery swap apparatus moves; and a controller, the controller being used to acquire the first distance from the distance measuring device, and the controller being further used to determine a position of the battery swap apparatus according to the first distance.

The battery swap apparatus further includes: a power transmission device, the power transmission device being used to record a second distance by which the battery swap apparatus moves; the controller is used to acquire the second distance by means of the power transmission device, and detect the position of the battery swap apparatus according to the first distance and the second distance.

In some embodiments, the power transmission device includes a motor, the motor is used to drive the battery swap apparatus to move, and the controller is used to determine the second distance by which the battery swap apparatus moves according to the number of rotations of the motor.

In some embodiments, the power transmission device includes an encoder, the encoder is used to determine the second distance, and the controller is used to acquire, from the encoder, the second distance by which the battery swap apparatus moves.

In some embodiments, the distance measuring device is a laser type distance measuring device.

In some embodiments, with the battery swap apparatus in a first position, the controller is used to acquire, from the distance measuring device, the first distance by which the battery swap apparatus moves, wherein the first position is a position where the battery swap apparatus is after moving by the second distance from an initial position, and the initial position is a position where the power transmission device starts to calculate the second distance.

In some embodiments, with the battery swap apparatus in the initial position, the controller is used to acquire a first reference distance from the distance measuring device; with the battery swap apparatus in the first position, the controller is used to acquire a second reference distance from the distance measuring device; and the controller is used to determine the first distance according to the first reference distance and the second reference distance.

In some embodiments, the controller is used to calculate a distance difference between the second distance and the first distance; and the controller is used to determine whether the battery swap apparatus is in a target position according to the distance difference.

In some embodiments, if a value of the distance difference is less than a first threshold, the controller is used to determine that the battery swap apparatus is in the target position; and if the value of the distance difference is greater than or equal to the first threshold, the controller is used to determine that the battery swap apparatus is not in the target position.

In some embodiments, if it is determined that the battery swap apparatus is not in the target position, the controller is used to adjust the position of the battery swap apparatus according to the distance difference.

In some embodiments, if the distance difference is a positive number, the controller is used to control the battery swap apparatus to move by a third distance along a moving direction of the battery swap apparatus; and if the distance difference is a negative number, the controller is used to control the battery swap apparatus to move by the third distance along a moving direction facing away from the battery swap apparatus; wherein the third distance is equal to the value of the distance difference.

In some embodiments, the power transmission device includes a variable frequency drive, the variable frequency drive is used to control a motor, and the motor is used to drive the battery swap apparatus to move.

In some embodiments, one variable frequency drive is used to control at least two motors.

In some embodiments, the battery swap apparatus is provided with at least two power transmission mechanisms, and each motor of the at least two motors is used to drive one of the power transmission mechanisms to cause the battery swap apparatus to move.

In some embodiments, the motor is disposed on a side of the power transmission mechanism facing away from the battery swap apparatus.

In some embodiments, the battery swap apparatus includes a first moving mechanism, a second moving mechanism, and a third moving mechanism, and the first moving mechanism, the second moving mechanism, and the third moving mechanism are used to control the battery swap apparatus to move in three mutually perpendicular directions, respectively.

In a third aspect, there is provided a device for detecting a position of a battery swap apparatus, including: a processor and a memory, the memory storing instructions, the instructions when run by the processor cause the device execute a method according to any embodiment in the above-mentioned first aspect.

In a fourth aspect, there is provided a battery swap station, including a battery swap apparatus according to any embodiment in the above-mentioned second aspect.

In some embodiments, the battery swap station further includes: a slide rail, the slide rail extending along a second direction, the battery swap apparatus moving along the slide rail in the second direction.

Providing the slide rail in the battery swap station can ensure that the battery swap apparatus moves within a certain range. At the time of determining the position of the battery swap apparatus, there is no possibility of failing to adjust because an actual position of the battery swap apparatus is too differed from a target position. In this way, it is possible to ensure that the battery swap apparatus is in a suitable position when executing a battery swap operation, thereby ensuring safety of a battery swap process.

In some embodiments, the battery swap station further includes: a reflective plate, the reflective plate is perpendicular to the second direction and is disposed facing a distance measuring device, and the second direction is a direction in which the battery swap apparatus moves.

Providing the reflective plate in the battery swap station allows a measurement from the distance measuring device to be more accurate, ensuring accuracy of the position of the battery swap apparatus, and thereby ensuring the safety of the battery swap process.

In a fifth aspect, there is provided a computer-readable storage medium, the computer-readable storage medium storing a computer program, the computer program, when run, executing a method according to any embodiment in the above-mentioned first aspect.

### Description of Drawings

In order to illustrate the technical solutions of the embodiments of the present application more clearly, the drawings required in the embodiments of the present application will be briefly introduced below. It will be apparent that the drawings described below are only some embodiments of the present application.
FIG. 1 is a schematic diagram of an application scenario provided in an embodiment of the present application.
FIG. 2 is a schematic block diagram of a method of detecting a position of a battery swap apparatus provided in an embodiment of the present application.
FIG. 3 is a schematic block diagram of a battery swap apparatus according to an embodiment of the present application.
FIG. 4 is a schematic block diagram of a method of detecting a position of a battery swap apparatus provided in an embodiment of the present application.
FIG. 5 is a schematic block diagram of another battery swap apparatus provided in an embodiment of the present application.
FIG. 6 is a schematic block diagram of another battery swap apparatus provided in an embodiment of the present application.
FIG. 7 is a schematic block diagram of another battery swap apparatus provided in an embodiment of the present application.
FIG. 8 is a structural schematic diagram of another battery swap system provided in an embodiment of the present application.
FIG. 9 is a schematic block diagram of a device for detecting a position of a battery swap apparatus provided in an embodiment of the present application.

In the accompanying drawings, the figures are not necessarily drawn to actual scale.

### Detailed Description

The implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", third" etc. are used for descriptive purposes only, and cannot be construed as indicating or implying relative importance. "Perpendicular" is not strictly perpendicular, but within the margin of errors allowed. "Parallel" is not strictly parallel, but within the margin of errors allowed.

All the directional words appearing in the following description are the directions shown in the figures and do not limit the specific structures of the present application. In the description of the present application, it is to be noted that unless otherwise expressly specified and limited, the terms "mount," "connected", and "connect" should be broadly understood, for example, they may be a fixed connection or a detachable connection or an integral connection; or may be a direct connection, or an indirect connection through an intermediate medium. For those of ordinary skill in the art, the specific meanings of the above terms in the present application may be understood according to specific circumstances.

Unless otherwise defined, all technical and scientific terms used in the present application have the same meaning as commonly understood by those skilled in the art belonging to the technical field of the present application; the terms in the present application used in the applied Specification are intended only for the purpose of describing specific embodiments and are not intended to limit the present application; the terms "include/comprise" and "have" and any variations thereof in the Specification and the Claims of the present application and in the description of drawings above are intended to cover non-exclusive inclusion.

Reference in the present application to "embodiment" means that a particular feature, structure, or characteristic described in connection with the embodiment may be contained in at least one embodiment of the present application. The appearance of this phrase in various places in the Specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

With the development of new energy technology, the application fields of batteries are more and more extensive. For example, they can be used as a source of power to supply power to vehicles, reducing the use of non-renewable resources. If the capacity of a battery in a vehicle is not enough to support continued driving of the vehicle, a charging apparatus such as a charging pile may be used to charge the vehicle, i.e., to charge the battery in the vehicle, to achieve the cycle of charging and discharging the battery. Or it is also possible to provide battery swap services for the vehicle through a battery swap station, i.e., the battery may be quickly removed from or mounted on the vehicle. The battery removed from the vehicle may be placed in a battery storage mechanism of the battery swap station for charging in preparation for battery swapping for vehicles entering the battery swap station later. The battery swap process mentioned in the embodiments of the present application may refer to a process of removing a battery from a vehicle and placing it in a battery swap station, or a process of taking a new battery out of the battery swap station and mounting it on the vehicle.

In the battery swap process, it is a general case where with the battery swap apparatus running on a fixed rail to a designated location, the battery is taken out or put in to complete the battery swap process. After receiving a battery swap instruction, a controller in the battery swap apparatus controls the battery swap apparatus to run a certain distance to reach the designated location. However, in some cases, such as if the battery swap apparatus is blocked by obstacles during moving, or a power transmission apparatus slips on a driving rail, or the power transmission apparatus itself slips while driving the battery swap apparatus to move, a power transmission device in the battery swap apparatus is still running, the controller will reckon that the battery swap apparatus is still moving. As a result, a distance that the battery swap apparatus actually moves is quite differed from a movement distance recorded by the controller. In case the battery swap apparatus executes a battery swap operation when not moved to a correct position, a danger may easily occur.

In view of this, an embodiment of the present application provide a method of detecting a position of a battery swap apparatus. The position of the battery swap apparatus is determined through a distance measured by a distance measuring device, which can avoid errors produced by the battery swap apparatus in the process of recording a movement distance. Also, a distance that the battery swap apparatus actually moves can be acquired efficiently and accurately, ensuring that the battery swap apparatus is in an accurate position when executing a battery swap operation, thereby ensuring safety of a battery swap process.

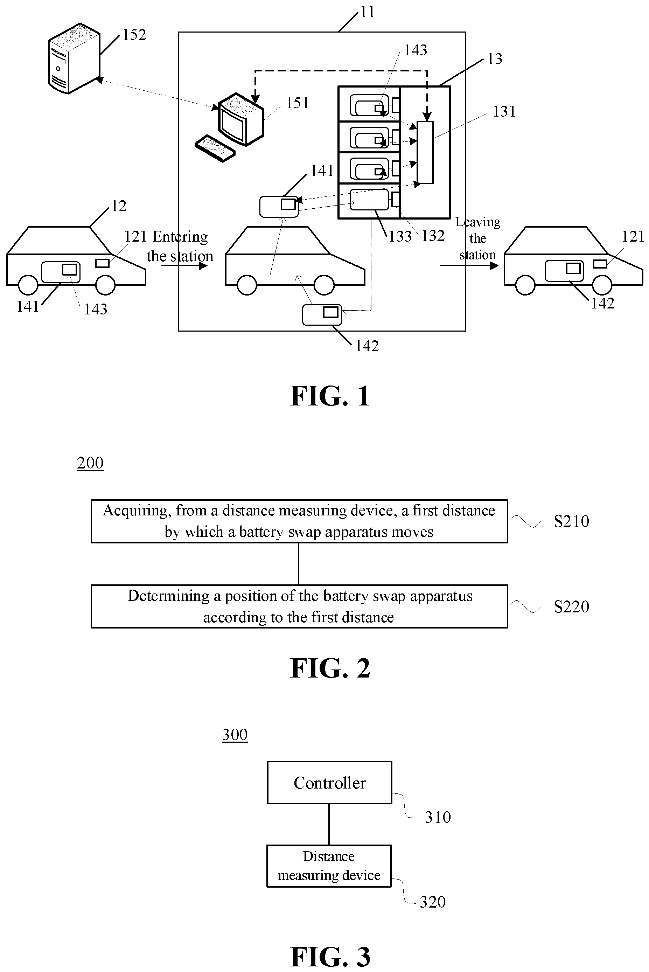

FIG. 1 shows a schematic diagram of an application scenario according to an embodiment of the present application. As shown in FIG. 1, this application scenario may involve a battery swap station 11, a vehicle 12, and a battery.

The battery swap station 11 may refer to a place that provides a battery swap service for a vehicle. For example, the battery swap station 11 may be a fixed place, or the battery swap station 11 may be a movable place such as a mobile battery swap vehicle, which is not limited here.

The vehicle 12 may be detachably connected to the battery. In some examples, the vehicle 12 may be a vehicle, such as a car and a truck, that uses a power battery as a source of power.

The battery may include a battery disposed in the vehicle 12 and a battery for battery swapping located in the battery swap station 11. In order to facilitate distinction, as shown in FIG. 1, a battery to be swapped in the vehicle 12 is denoted as a battery 141, and the battery for battery swapping in the battery swap station is denoted as a battery 142. The battery may be a lithium-ion battery, a lithium-metal battery, a lead-acid battery, a nickel-cadmium battery, a nickel-metal hydride battery, a lithium-sulfur battery, a lithium-air battery, a sodium-ion battery, or the like, which is not limited here. In terms of scale, the battery may be a battery cell, a battery module, or a battery pack, which is not limited herein. The battery may serve as a source of power to power a motor of the vehicle 12, and may also power other electrical devices in the vehicle 12, e.g., the battery may also power an in-vehicle air conditioner, an in-vehicle player etc.

After the vehicle 12 with the battery 141 mounted is driven into the battery swap station 11, the battery swap station 11 removes the battery 141 from the vehicle 12 through a battery swap apparatus (not shown in the figure), and takes the battery 142 out of the battery swap station 11 before mounting the battery 142 to vehicle 12. Afterwards, the vehicle 12 with the battery 142 mounted may be driven away from the battery swap station 11. With this battery swap technology, the vehicle may be quickly replenished with energy in a few minutes and even tens of seconds, allowing for improved user experience.

FIG. 2 shows a schematic flowchart of a method 200 of detecting a position of a battery swap apparatus 300 according to an embodiment of the present application. The method 200 may be applied in the battery swap apparatus 300 and executed by a controller 310 in the battery swap apparatus 300. The method 200 may include at least some of the following.

S210: acquire, from a distance measuring device 320, a first distance that the battery swap apparatus 300 moves.

S220: determine the position of the battery swap apparatus 300 according to the first distance.

The structure of the battery swap apparatus 300 may be shown in FIG. 3, including the controller 310 and the distance measuring device 320. The controller 310 is used to execute the method 200, and the distance measuring device 320 is used to measure a distance that the battery swap apparatus 300 moves, e.g., the first distance.

The first distance refers to a distance that the battery swap apparatus 300 actually moves during moving. In a process of the distance measuring device 320 performs a distance measurement, a fixed position will be usually used as a reference position, and the reference position is used as a benchmark to calculate a distance that the battery swap apparatus 300 moves relative to the reference position, which is the first distance.

The distance measuring device 320 is usually disposed on the battery swap apparatus 300 and moves or stops along with the battery swap apparatus 300. Therefore, the first distance measured by the distance measuring device 320 may be considered as the first distance that the battery swap apparatus 300 moves. Also, in the process of the distance measuring device 320 measuring a distance, a distance measurement principle thereof is usually irrelevant to the structure of the battery swap apparatus 300 itself. Therefore, it may be considered that the first distance measured by the distance measuring device 320 is the distance that the battery swap apparatus 300 actually moves, and then the position of the battery swap apparatus 300 determined according to the first distance is also a position which the battery swap apparatus 300 is actually in.

The distance measuring device 320 may measure the position of the battery swap apparatus 300 and calculate the first distance only at the beginning and end of a moving process of the battery swap apparatus 300; and may also measure the position of the battery swap apparatus 300 in real time in the process where the battery swap apparatus 300 moves, and after the battery swap apparatus 300 has moved the first distance, performs information transmission with respect to the controller 310, the battery swap apparatus 300 being controlled to stop by the controller 310.

With the distance that the battery swap apparatus 300 moves acquired through the distance measuring device 320, the distance that the battery swap apparatus 300 moves can be efficiently and accurately acquired, avoiding the problem of inaccurate recording of the device in the battery swap apparatus 300 that records a travel distance of the battery swap apparatus 300. Therefore, the detection precision of position of battery swap apparatus 300 is improved, such that the battery swap apparatus 300 can carry out a battery swap operation at an accurate position, ensuring safety of a battery swap process.

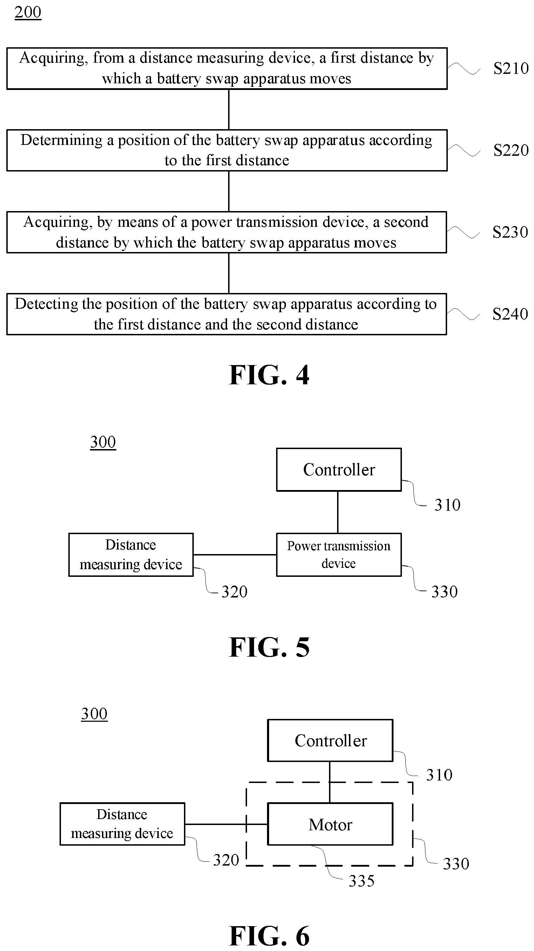

According to some embodiments of the present application, optionally, the battery swap apparatus 300 is also provided with a power transmission device 330. The method 200 is executed by the controller 310 in the battery swap apparatus 300, and may also include the following, as shown in FIG. 4.

S230: acquire, by means of the power transmission device 330, a second distance that the battery swap apparatus 300 moves.

S240: detect the position of the battery swap apparatus 300 according to the first distance and the second distance.

The structure of the battery swap apparatus 300 may be as shown in FIG. 5. Based on the distance measuring device 320 and the controller 310, the battery swap apparatus 300 may include a power transmission device 330. The power transmission device 330 is a part used to drive the battery swap apparatus 300 to move during driving. Startup and shutdown of the power transmission device 330 may be controlled by the controller 310 to control movement and stop of the battery swap apparatus 300.

The second distance refers to a distance that the power transmission device 330 on the battery swap apparatus 300, when running, can cause the battery swap apparatus 300 to move. It may be obtained by the controller 310 acquiring, according to running of the power transmission device 330, that the power transmission device 330 drives the battery swap apparatus 300 to move. It is also possible to acquire, by the power transmission device 330 itself, the second distance that the power transmission device 330 drives the battery swap apparatus 300 to move, and send the second distance is to the controller 310.

The second distance is usually the same as a distance that the battery swap apparatus 300 actually moves, that is, the second distance is usually the same as the first distance. Therefore, the controller 310 may judge whether it is required to control the battery swap apparatus 300 to stop moving, using the second distance recorded by the power transmission device 330 as basis for whether the battery swap apparatus 300 moves to a target position. For example, the controller 310 may instruct the battery swap apparatus 300 to move to the target position, and then the power transmission apparatus drives the battery swap apparatus 300 to start moving. When the battery swap apparatus 300 moves to the target position, the controller 310 controls the battery swap apparatus 300 to stop moving through communication between the controller and the power transmission device 330, and acquires the second distance that the battery swap apparatus 300 moves through the power transmission device 330.

In order to further confirm whether the battery swap apparatus 300 has accurately moved to the target position, the first distance obtained by the distance measuring device 320 and the second distance obtained by means of the power transmission device 330 may be combined to determine the position of the battery swap apparatus 300. For example, if the first distance and the second distance are not much differed, it may be considered that the position of the battery swap apparatus 300 is accurate, and a next battery swap step may be executed; if the first distance and the second distance are significantly differed, then there may be a fault to one of the two distances and troubleshooting is required.

In the embodiment of the present application, judging the position of the battery swap apparatus 300 by combining the first distance acquired from the distance measuring device 320 and the second distance acquired by means of the power transmission device 330 allows improved precision for battery swap apparatus 300 position detection, enabling the battery swap apparatus 300 to move to a target position more accurately, thereby ensuring the safety of the battery swap process. Also, the power transmission device 330 may communicate with the controller 310 in real time to control the battery swap apparatus 300 to stop at a suitable position without measuring, in real time by distance measuring, the distance that the battery swap apparatus 300 moves, which can also reduce energy consumption.

According to some embodiments of the present application, optionally, the power transmission device 330 includes a motor 335, the motor 335 is used to drive the battery swap apparatus 300 to move, and the second distance that the battery swap apparatus 300 moves is determined according to the number of rotations of the motor 335.

The power transmission device 330 drives the battery swap apparatus 300 to move, which may specifically be achieved through the motor 335 in the power transmission device 330, as shown in FIG. 6. The motor 335 may drive a power transmission mechanism on the battery swap apparatus 300, e.g., a conveyor belt or wheel, to bring the battery swap apparatus 300 in motion. One rotation of the conveyor belt or wheel may cause the battery swap apparatus 300 to move a fixed distance. Therefore, at determining the second distance that the battery swap apparatus 300 moves, the second distance above may be derived by recording the number of rotations of the motor 335 and multiplying the number of rotations with a length for one rotation of the conveyor belt or wheel.

Only one motor 335 may be provided on the battery swap apparatus 300. For example, when the battery swap apparatus 300 is driven by one conveyor belt, this motor 335 controls rotation of this conveyor belt; for another example, when the battery swap apparatus 300 is driven by two wheels or conveyor belts, this motor 335 may be disposed in the middle of the two wheels or two conveyor belts to ensure steady running of the two wheels or conveyor belts. Multiple motors 335 may also be provided on the battery swap apparatus 300. For example, one motor 335 may be provided for each conveyor belt or wheel, or if the battery swap apparatus 300 is provided with more than two conveyor belts or wheels, motors 335 may be provided on only two of the conveyor belts or wheels, and other conveyor belts or wheels without motors 335 are driven by the conveyor belts or wheels provided with the motors 335.

In the embodiment of the present application, the controller 310 may directly record the number of rotations of the motor 335 to thus determine the second distance, or may indirectly acquire the second distance through recording of the number of rotations of the motor 335 and calculation of the second distance by other devices.

With the second distance determined from the motor 335 that drives the battery swap apparatus 300 to move, the second distance can be recorded more accurately. Therefore, the detection precision of position of battery swap apparatus 300 is improved, such that the battery swap apparatus 300 can carry out a battery swap operation at an accurate position, ensuring safety of a battery swap process.

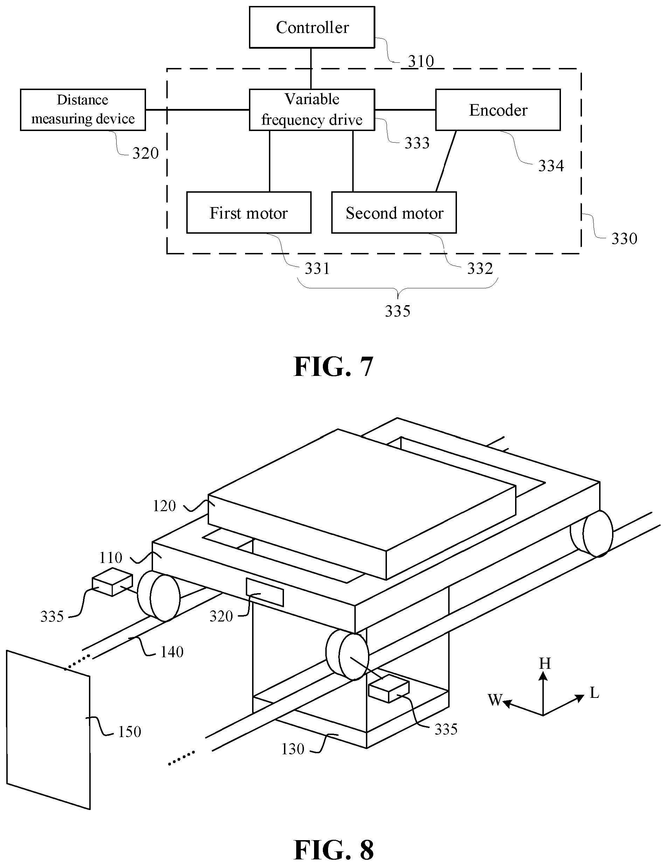

According to some embodiments of the present application, optionally, the power transmission device 330 includes an encoder 334. As shown in FIG. 7, the encoder 334 is used to determine the second distance, and the second distance that the battery swap apparatus 300 moves is acquired from the encoder 334.

The encoder 334 is a device in the power transmission device 330 that records how far the power transmission device 330 may drive the battery swap apparatus 300 to move. For example, in one possible implementation, the encoder 334 may record the number of rotations of the motor 335 and calculate the second distance that the battery swap apparatus 300 moves according to the number of rotations.

The encoder 334 may transmit the acquired information to the controller 310. For example, information transmission may be achieved by connecting interfaces between the encoder and the controller through wires. The encoder 334 may be connected to the controller 310 directly, or may be connected to the controller 310 through an interface on other devices, e.g., may be connected to the controller 310 using an interface on the motor 335 or a variable frequency drive 333 that drives the motor 335. If the encoder 334 is indirectly connected to the controller 310, a device providing the interface does not process information transmitted between the encoder 334 and the controller 310.

The encoder 334 may judge whether the battery swap apparatus 300 has moved to a target position by recording the number of rotations of the motor 335, and send to the controller 310 the second distance that the battery swap apparatus 300 moves, making it convenient for the controller 310 to judge whether the position of the battery swap apparatus 300 is accurate. This not only allows the distance that the battery swap apparatus 300 moves, to be more precise, but also helps the controller 310 re-judge the position of the battery swap apparatus 300, improving the detection precision of position of the battery swap apparatus 300. The battery swap apparatus 300 is enabled to carry out the battery swap operation at the accurate position, ensuring the safety of the battery swap process.

According to some embodiments of the present application, optionally, the distance measuring device 320 is a laser type distance measuring device 320.

In the embodiment of the present application, any device that may measure the distance that the battery swap apparatus 300 actually moves may be used as the distance measuring device 320 in the embodiment of the present application. In one specific implementation, the distance measuring device 320 may be a laser type distance measuring device 320. A distance between the battery swap apparatus 300 and a reference position may be calculated by emitting laser to the reference position and receiving the reflected laser. When the battery swap apparatus 300 moves to a different position, the laser type distance measuring device 320 may acquire the distances between multiple battery swap apparatuses 300 and the reference position, enabling the distance that the battery swap apparatus 300 actually moves, to be calculated.

The laser type distance measuring device 320 has the advantages of fast response and accurate measurement. Using the laser type distance measuring device 320 to acquire the first distance can further improve battery swap apparatus 300 position detection accuracy, and can also improve positioning efficiency, ensuring the safety of the battery swap process.

According to some embodiments of the present application, optionally, if the battery swap apparatus 300 is in a first position, the first distance that the battery swap apparatus 300 moves is acquired from the distance measuring device 320, wherein the first position is a position where the battery swap apparatus 300 is after moving by the second distance from an initial position, and the initial position is a position where the power transmission device 330 starts to calculate the second distance.

The battery swap apparatus 300 may move from the initial position to the first position in the moving process. The initial position refers to a position where the battery swap apparatus 300 is about to start moving, and the first position refers to a target position to which the battery swap apparatus 300 needs to move during this movement. For example, in one possible case, the battery swap apparatus 300 has not received any instruction, is stationary in a certain position. and starts moving from this position when receiving a battery swap instruction, and this position is then the initial position, wherein the battery swap instruction may instruct the battery swap apparatus 300 to move to another position, and this another position is the first position. In another possible case, the battery swap apparatus 300 receives the battery swap instruction while moving, and a position where the battery swap apparatus 300 is when executing the battery swap instruction is the initial position, and a position in the battery swap instruction which the battery swap apparatus 300 is instructed to move to is the first position.

According to the invention, the first position of the battery swap apparatus 300 is determined by the controller 310. For example, the controller 310 may determine a distance that the battery swap apparatus 300 moves by recording the number of rotations of the motor 335, thereby determining whether the battery swap apparatus 300 has moved to the first position. In another possible implementation, the first position of the battery swap apparatus 300 may also be determined by the encoder 334. For example, the encoder 334 records the number of rotations of the motor 335 and performs information transmission with the controller 310 when the battery swap apparatus 300 moves to the first position such that it is determined that the battery swap apparatus 300 has moved to the first position, and the controller 310 controls the battery swap apparatus 300 to stop.

After the battery swap apparatus 300 moves to the first position, the distance measuring device 320 measures a position where the battery swap apparatus 300 is and acquires a first distance. In the process of the battery swap apparatus 300 moving from the initial position to the first position, the distance measuring device 320 no longer needs to detect the position of the battery swap apparatus 300 in real time.

The first distance is measured through the distance measuring device 320 after the battery swap apparatus 300 moves to a certain position, which can reduce running time of the distance measuring device 320 and can reduce energy consumption while ensuring measurement precision. Also, a distance that the battery swap apparatus 300 moves is acquired using two approaches. This helps the controller 310 re-judge the position of the battery swap apparatus 300, improving the detection precision of position of the battery swap apparatus 300. The battery swap apparatus 300 is enabled to carry out the battery swap operation at the accurate position, ensuring the safety of the battery swap process.

According to some embodiments of the present application, optionally, if the battery swap apparatus 300 is in the initial position, a first reference distance is acquired from the distance measuring device 320; if the battery swap apparatus 300 is in the first position, a second reference distance is acquired from the distance measuring device 320; and the first distance is determined according to the first reference distance and the second reference distance.

The distance measuring device 320 usually takes one fixed position as a reference position, and measures distances between the battery swap apparatus 300 and the reference position, respectively, at positions where the battery swap apparatus 300 starts moving and stops moving. A difference between the two distances is a distance that the battery swap apparatus 300 moves, which is the first distance. Specifically, the battery swap apparatus 300 moves from the initial position to the first position, and a distance between the battery swap apparatus 300 and the reference position is measured once at the initial position, which is recorded as the first reference distance; a distance between the battery swap apparatus 300 and the reference position is measured again at the first position, which is recorded as the second reference distance. Then, an absolute value of the difference between the first reference distance and the second reference distance is the first distance.

Determining the first distance by only two measurements can minimize energy consumption on the basis of ensuring accuracy of first distance measurements. Also, measuring the distances between the battery swap apparatus 300 and the reference position with the battery swap apparatus 300 in the initial position and the first position can ensure accuracy of first distance measurement, which facilitates improved detection precision for the position of the battery swap apparatus 300, enabling the battery swap apparatus 300 to carry out the battery swap operation at the accurate position, and ensuring the safety of the battery swap process.

According to the invention, a distance difference between the second distance and the first distance is calculated; and whether the battery swap apparatus 300 is in a target position is determined according to the distance difference.

The first distance is a distance acquired by the distance measuring device 320, i.e., a distance that the battery swap apparatus 300 actually moves; the second distance is a distance acquired by the power transmission device 330, i.e., a distance that the power transmission device 330 on the battery swap apparatus 300 can drive the battery swap apparatus 300 moves; the target position refers to a position where the battery swap apparatus 300 is expected to reach.

When a difference between the two distances is 0, it may be considered that the distance that the power transmission device 330 brings the battery swap apparatus 300 to move is the distance that the battery swap apparatus 300 actually moves. That is, a power transmission apparatus is not blocked by an obstacle, experiences no slip etc. in the process of bringing the battery swap apparatus 300 in motion, i.e., the battery swap apparatus 300 is in the target position.

When the difference between the distances is not 0, it may be considered that an error occurs to the moving distance while the power transmission device 330 brings the battery swap apparatus 300 in motion. The power transmission apparatus enables the distance that the battery swap apparatus 300 moves, to be inconsistent with the distance the battery swap apparatus 300 actually moves, i.e., the battery swap apparatus 300 is not in the target position.

Re-judging the position of the battery swap apparatus 300 through two distance measuring approaches allows the position of the battery swap apparatus 300 to be determined more accurately, which facilitates timely adjustment of the position of the battery swap apparatus 300 and avoids danger occurrence in the battery swap process due to position errors of the battery swap apparatus 300, thus enabling the safety of the battery swap process to be ensured.

According to some embodiments of the present application, optionally, if a value of the distance difference is less than a first threshold, it is determined that the battery swap apparatus 300 is in the target position; and if the value of the distance difference is greater than or equal to the first threshold, it is determined that the battery swap apparatus 300 is not in the target position.

In an actual production process, a certain error is allowed for the position of the battery swap apparatus 300. Within the certain error, the battery swap apparatus 300 executing the battery swap process is not affected. The battery swap apparatus 300 may also be considered to be in the target position. Therefore, the first threshold may be set for a value of the calculated distance difference between the second distance and the first distance, wherein the value of the distance difference refers to an absolute value of the distance difference. By comparing the value of the distance difference with the first threshold, it is determined that the battery swap apparatus 300 is in the target position or is not in the target position. A value of the first threshold may be, for example, 5 mm.

When the battery swap apparatus 300 is in the target position, the battery swap apparatus 300 may be controlled to execute a next battery swap operation; and when the battery swap apparatus 300 is not in the target position, an error may be reported to prompt a worker to repair the battery swap apparatus 300 in time.

By providing the first threshold, a certain error may be allowed at the time of deciding the position of the battery swap apparatus 300, avoiding affected production efficiency due to overly fine adjustments of the position of the battery swap apparatus 300. Also, judging the distance difference between the first distance and the second distance enables whether the battery swap apparatus 300 is in the target position to be judged in time, which helps carry out the battery swap operation after the battery swap apparatus 300 is moved to an accurate position, ensuring the safety of the battery swap process.

According to some embodiments of the present application, optionally, if it is determined that the battery swap apparatus 300 is not in the target position, the method 200 further includes: adjusting the position of the battery swap apparatus 300 according to the distance difference.

When the battery swap apparatus 300 is not in the target position, it is possible to re-judge the position of the battery swap apparatus 300 according to the first distance and the second distance in addition to reporting the error. Further, the position of the battery swap apparatus 300 is corrected according to a result of the re-judgment to create closed-loop control. Specifically, it may be possible that if the battery swap apparatus 300 is not in the target position, that is, if the value of the distance difference between the second distance and the first distance of the battery swap apparatus 300 is greater than or equal to the first threshold, the position of the battery swap apparatus 300 is adjusted according to the difference of the two distances to enable the battery swap apparatus 300 to finally move to the target position and execute a next battery swap step.

If the position which the battery swap apparatus 300 is in is significantly differed from the target position, the battery swap apparatus 300 can automatically adjust its position to move to the target position. This facilitates implementing an automatic control process for the battery swap apparatus 300, and can also ensure that the battery swap apparatus 300 is in the target position when carrying out a battery swap operation, thereby ensuring the safety of the battery swap process.

According to some embodiments of the present application, optionally, if the distance difference is a positive number, the battery swap apparatus 300 is controlled to move by a third distance along a moving direction of the battery swap apparatus 300; and if the distance difference is a negative number, the battery swap apparatus 300 is controlled to move by the third distance along a moving direction facing away from the battery swap apparatus 300; wherein the third distance is equal to the value of the distance difference.

The distance difference between the second distance and the first distance refers to a calculation result derived by subtracting the first distance from the second distance. If the difference between the two distances is a positive number, it is demonstrated that a movement distance recorded by the power transmission device 330 in the battery swap apparatus 300 is greater than the distance that the battery swap apparatus 300 actually moves, and the controller 310 may then control the battery swap apparatus 300 to continue moving the third distance in the original movement direction, the third distance being an absolute value of the difference between the first distance and the second distance. If the difference between the two distances is a negative number, it is demonstrated that the movement distance recorded by the power transmission device 330 in the battery swap apparatus 300 is less than the distance that the battery swap apparatus 300 actually moves, and the controller 310 may then control the battery swap apparatus 300 to move back the third distance, i.e., to move by the third distance along a direction facing away from the original movement direction.

In this way, this enables the battery swap apparatus 300 to automatically adjust the position which it is in, facilitates implementing an automatic control process for the battery swap apparatus 300, and ensures that the battery swap apparatus 300 is in the target position when carrying out a battery swap operation, thereby ensuring the safety of the battery swap process.

According to some embodiments of the present application, optionally, the power transmission device 330 includes a variable frequency drive 333, the variable frequency drive 333 is used to control a motor 335, and the motor 335 is used to drive the battery swap apparatus 300 to move.

The variable frequency drive 333 causes the motor 335 to work by applying a voltage to the motor 335, and controls a rotational speed of the motor 335 by controlling a magnitude of the output voltage, thereby controlling a speed at which the battery swap apparatus 300 works. In one possible implementation, the motor 335 may be connected to a power transmission mechanism on the battery swap apparatus 300, the motor 335 is then used to drive the power transmission mechanism to move, and the power transmission mechanism brings the battery swap apparatus 300 to work. The power transmission mechanism may be, for example, a wheel or a conveyor belt, which is not limited in the embodiments of the present application.

The variable frequency drive 333 may control multiple types of motors 335. When parameters of the motor 335 need to be adjusted, the motor 335 may be directly replaced without replacing the variable frequency drive 333 at the same time that controls the motor 335. This enables the battery swap apparatus 300 to be adjusted more conveniently as needed, facilitating lowering of production cost.

According to some embodiments of the present application, optionally, one variable frequency drive 333 is used to control at least two motors 335, and the at least two motors 335 are used to drive the battery swap apparatus 300 to move.

The movement of the battery swap apparatus 300 driven by the power transmission device 330 may be achieved by the variable frequency drive 333 controlling rotation of the motor 335. The power transmission device 330 may include the variable frequency drive 333 and the motor 335, and may optionally further include an encoder 334 to calculate a second distance when the power transmission device 330 drives the battery swap apparatus 300 to move. As shown in FIG. 7, one variable frequency drive 333 controlling two motors 335 is taken as an example for explanation in FIG. 7.

The variable frequency drive 333 controls the rotational speed of the motor 335 by controlling the magnitude of an output voltage, and the first motor 331 and the second motor 332 are both controlled by the same variable frequency drive 333, so the rotational speeds of the first motor 331 and the second motor 332 can always remain consistent. Therefore, in the process of driving the battery swap apparatus 300 to move, the battery swap apparatus 300 can be ensured to move steadily.

At least two motors 335 in the power transmission device 330 are controlled by one variable frequency drive 333 and run simultaneously. Therefore, if the power transmission device 330 is provided with an encoder 334, the encoder 334 may record the number of rotations of only one motor 335 to calculate the second distance that the battery swap apparatus 300 moves.

By controlling at least two motors 335 with one variable frequency drive 333, it is possible to ensure that the at least two motors 335 run synchronously, thereby ensuring steady movement of the battery swap apparatus 300 when the motors 335 drive the battery swap apparatus 300 to move, avoiding potential safety hazards in a battery swap process due to unsteady movement of the battery swap apparatus 300, and ensuring the safety of the battery swap process.

According to some embodiments of the present application, optionally, the battery swap apparatus 300 is provided with at least two power transmission mechanisms, and each motor 335 of the at least two motors 335 is used to drive one of the power transmission mechanisms to cause the battery swap apparatus to move 300.

The power transmission mechanism refers to a mechanism on the battery swap apparatus 300 that directly brings the battery swap apparatus 300 to move. The power transmission mechanism may be, for example, similar mechanisms such as a wheel or a conveyor belt on the battery swap apparatus 300. In one possible implementation, the battery swap apparatus 300 may move on two parallel slide rails 140, and at least one power transmission mechanism is provided on each slide rail 140 to move along this slide rail 140. A moving direction of the battery swap apparatus 300 is then parallel to a direction in which the slide rail 140 extends, i.e., a first direction L; and the power transmission mechanisms are arranged at intervals in a second direction W perpendicular to the first direction L. In another possible implementation, at least two power transmission mechanisms may also be arranged at intervals along the first direction L. In order to enable the battery swap apparatus 300 to move steadily, each motor 335 of the at least two motors 335 is used to drive one power transmission mechanism. In this way, a force taken by each power transmission mechanism is the same, and steady movement of the battery swap apparatus 300 can be achieved.

Providing one motor 335 for each power transmission mechanism and controlling the motor 335 by the same variable frequency drive 333 facilitate unified running of the power transmission mechanisms on the battery swap apparatus 300. This ensures that the battery swap apparatus 300 can move steadily to a target position during running, and can prevent the problem that when one motor 335 controls multiple power transmission mechanisms, the battery swap apparatus 300 is unsteady during moving since the different power transmission mechanisms take different forces due to the different distances between the motor 335 and the different power transmission mechanisms, ensuring the safety of the battery swap process.

According to some embodiments of the present application, optionally, the motor 335 is disposed on a side of the power transmission mechanism facing away from the battery swap apparatus 300.

In order to flexibly take a battery out of or put in during the battery swap process, the battery swap apparatus 300 can usually move in three mutually perpendicular directions to perform a battery swap operation at an accurate position. In order to avoid interference with parts of the battery swap apparatus 300 moving in different directions, the motor 335 used to drive the power transmission mechanism to run is usually disposed outside the power transmission mechanism, such that the inside part of the power transmission mechanism leaves enough space for the parts of the battery swap apparatus 300 moving in the different directions to move. The outside of the power transmission mechanism is the side of the power transmission mechanism facing away from the battery swap apparatus 300, may be a side facing away from the battery swap apparatus 300 along the first direction L or a side facing away from the battery swap apparatus 300 along the second direction W, or may also be a side facing away from the battery swap apparatus 300 along a third direction H. For example, FIG. 8 shows one possible structure. As shown in FIG. 8, the battery swap apparatus 300 is provided with four wheels, and motors 335 are respectively provided on the outsides of two of the wheels to drive the battery swap apparatus 300 to move in the first direction L.

In this way, it may be prevented that the motors 335 block movement of other parts of the battery swap apparatus 300 in the second direction W, such that the battery swap apparatus 300 can move within a wider range, facilitating smooth progress of the battery swap process and ensuring the safety of the battery swap process.

According to some embodiments of the present application, optionally, the battery swap apparatus 300 includes a first moving mechanism 110, a second moving mechanism 120, and a third moving mechanism 130, and the first moving mechanism 110, the second moving mechanism 120, and the third moving mechanism 130 are used to control the battery swap apparatus 300 to move in three mutually perpendicular directions, respectively.

To enable a battery to be swapped in a wider range, the battery swap apparatus 300 may include a first moving mechanism 110, a second moving mechanism 120, and a third moving mechanism 130. As shown in FIG. 8, the first moving mechanism 110 may control the battery swap apparatus 300 to move in the first direction L, the second moving mechanism 120 may control the battery swap apparatus 300 to move in the second direction W, and the third moving mechanism 130 may control the battery swap apparatus 300 to move in the third direction H. In one possible implementation, the first moving mechanism 110, the second moving mechanism 120, and the third moving mechanism 130 are each provided with a set of devices for detecting a position of the battery swap apparatus 300 to achieve positioning of the battery swapping device 300 in three mutually perpendicular directions.

This structure may enable the battery swap apparatus 300 to move within a wider range and be accurately positioned in any direction, which helps ensure that the battery swap apparatus 300 carries out a battery swap operation at an accurate position, thus ensuring the safety of the battery swap process.

The present application also provides a battery swap apparatus 300, including: a distance measuring device 320, the distance measuring device 320 being used to measure a first distance that the battery swap apparatus 300 moves; and a controller 310, the controller 310 being used to acquire the first distance from the distance measuring device 320, and the controller 310 being further used to determine a position of the battery swap apparatus 300 according to the first distance.

According to the invention, the battery swap apparatus 300 further includes: a power transmission device 330, the power transmission device 330 being used to record a second distance that the battery swap apparatus 300 moves; the controller 310 is used to acquire the second distance by means of the power transmission device 330, and detect the position of the battery swap apparatus 300 according to the first distance and the second distance.

According to some embodiments of the present application, optionally, the power transmission device 330 includes a motor 335, the motor 335 is used to drive the battery swap apparatus 300 to move, and the controller 310 is used to determine the second distance that the battery swap apparatus 300 moves according to the number of rotations of the motor 335.

According to some embodiments of the present application, optionally, the power transmission device 330 includes an encoder 334, the encoder 334 is used to determine the second distance, and the controller 310 is used to acquire, from the encoder 334, the second distance that the battery swap apparatus 300 moves.

According to some embodiments of the present application, optionally, the distance measuring device 320 is a laser type distance measuring device 320.

According to some embodiments of the present application, optionally, if the battery swap apparatus 300 is in a first position, the controller 310 is used to acquire, from the distance measuring device 320, the first distance that the battery swap apparatus 300 moves, wherein the first position is a position where the battery swap apparatus 300 is after moving by the second distance from an initial position, and the initial position is a position where the power transmission device 330 starts to calculate the second distance.

According to some embodiments of the present application, optionally, if the battery swap apparatus 300 is in the initial position, the controller 310 is used to acquire a first reference distance from the distance measuring device 320; if the battery swap apparatus 300 is in the first position, the controller 310 is used to acquire a second reference distance from the distance measuring device 320; and the controller 310 is used to determine the first distance according to the first reference distance and the second reference distance.

According to the invention, the controller 310 is used to calculate a distance difference between the second distance and the first distance; and the controller 310 is used to determine whether the battery swap apparatus 300 is in a target position according to the distance difference.

According to some embodiments of the present application, optionally, if a value of the distance difference is less than a first threshold, the controller 310 is used to determine that the battery swap apparatus 300 is in the target position; and if the value of the distance difference is greater than or equal to the first threshold, the controller 310 is used to determine that the battery swap apparatus 300 is not in the target position.

According to some embodiments of the present application, optionally, if it is determined that the battery swap apparatus 300 is not in the target position, the controller 310 is used to adjust the position of the battery swap apparatus 300 according to the distance difference.

According to some embodiments of the present application, optionally, if the distance difference is a positive number, the controller 310 is used to control the battery swap apparatus 300 to move by a third distance along a moving direction of the battery swap apparatus 300; and if the distance difference is a negative number, the controller 310 is used to control the battery swap apparatus 300 to move by the third distance along a moving direction facing away from the battery swap apparatus 300; wherein the third distance is equal to the value of the distance difference.

According to some embodiments of the present application, optionally, the power transmission device includes a variable frequency drive 333, the variable frequency drive 333 is used to control a motor 335, and the motor 335 is used to drive the battery swap apparatus 300 to move.

According to some embodiments of the present application, optionally, one variable frequency drive 333 is used to control at least two motors 335.

According to some embodiments of the present application, optionally, the battery swap apparatus 300 is provided with at least two power transmission mechanisms, and each motor 335 of the at least two motors 335 is used to drive one of the power transmission mechanisms to cause the battery swap apparatus to move 300.

According to some embodiments of the present application, optionally, the motor 335 is disposed on a side of the power transmission mechanism facing away from the battery swap apparatus 300.

According to some embodiments of the present application, optionally, the battery swap apparatus 300 includes a first moving mechanism 110, a second moving mechanism 120, and a third moving mechanism 130, and the first moving mechanism 110, the second moving mechanism 120, and the third moving mechanism 130 are used to control the battery swap apparatus 300 to move in three mutually perpendicular directions, respectively.

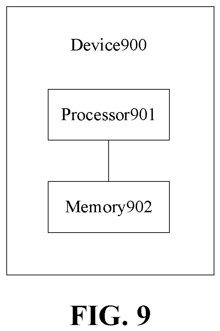

The present application further provides a device 900 of detecting a position of a battery swap apparatus 300. As shown in FIG. 9, the device 900 includes a processor 901 and a memory 902, the memory 902 storing instructions, the instructions when run by the processor 901 cause the device 900 execute a method according to any embodiment of the embodiments above.

The present application further provides a computer-readable storage medium, the computer-readable storage medium storing a computer program, the computer program, when run, executing a method according to any embodiment the embodiments above.

The present application further provides a battery swap station, including: a battery swap apparatus 300 according to the embodiments above.

According to some embodiments of the present application, optionally, the battery swap station further includes: a slide rail 140, the slide rail 140 extending along a first direction L, the battery swap apparatus 300 moving along the slide rail 140 in the first direction L.

In order to ensure that the battery swap apparatus 300 moves on an existing rail, the slide rail 140 is provided at a place in the battery swap station a traveling crane needs to be arranged. As shown in FIG. 8, a direction in which the slide rail 140 extends is usually the same as a direction in which the battery swap apparatus 300 moves, i.e., the first direction L. When the battery swap apparatus 300 is provided with a first moving mechanism 110, a second moving mechanism 120, and a third moving mechanism 130, the first direction L may be a direction in which the first moving mechanism 110 moves.

Providing the slide rail 140 in the battery swap station can ensure that the battery swap apparatus 300 moves within a certain range. At the time of determining the position of the battery swap apparatus 300, there is no possibility of failing to adjust because an actual position of the battery swap apparatus 300 is too differed from a target position. In this way, it is possible to ensure that the battery swap apparatus 300 is in a suitable position when executing a battery swap operation, thereby ensuring safety of a battery swap process.

According to some embodiments of the present application, optionally, the battery swap station further includes: a reflective plate 150, the reflective plate 150 is perpendicular to the first direction L and is arranged facing a distance measuring device 320, and the first direction L is a direction in which the battery swap apparatus 300 moves.

At the time of acquiring a first distance that the battery swap apparatus 300 moves using the distance measuring device 320, the distance measuring device 320 may take a position of the reflective plate 150 as a reference position to measure a distance between the battery swap apparatus 300 and the reflective plate 150 when in different positions, thereby enabling the first distance that the battery swap apparatus 300 moves to be calculated. When the distance measuring device 320 is a laser type distance measuring device 320, the reflective plate 150 can also better reflect laser emitted by the distance measuring device 320, reducing interference from a surrounding environment on the distance measuring device 320.

The reflective plate 150 may be disposed in the first direction L, and the reflective plate 150 is perpendicular to the first direction L. For example, where the battery swap station includes the slide rail 140 extending along the first direction L, the reflective plate 150 may be disposed at the end of the slide rail 140 and disposed facing the distance measuring device 320, and the laser that the distance measuring device 320 emits along the first direction L can then be reflected by the reflective plate 150 to the distance measuring device 320, enabling the distance measuring device 320 to accurately measure a distance between the battery swap apparatus 300 and the reflective plate 150 when in this position.

In case the battery swap apparatus 300 includes a second moving mechanism 120 that moves along a second direction W, the reflective plate 150 may then be disposed on the first moving mechanism 110 and be disposed, perpendicularly to the second direction W, facing the distance measuring device 320 on the second moving mechanism 120.

Providing the reflective plate 150 in the battery swap station allows a measurement from the distance measuring device 320 to be more accurate, ensuring accuracy of the position of the battery swap apparatus 300, and thereby ensuring the safety of the battery swap process.

While the present application has been described with reference to the preferred embodiments, various modifications may be made In particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A method of detecting a position of a battery swap apparatus (300), the battery swap apparatus (300) being provided with a distance measuring device (320), and the method comprising:
acquiring, from the distance measuring device (320), a first distance by which the battery swap apparatus (300) moves;
and determining the position of the battery swap apparatus (300) according to the first distance;
wherein the battery swap apparatus (300) is further provided with a power transmission device (330), and the method further comprises:
acquiring, by means of the power transmission device (330), a second distance by which the battery swap apparatus (300) moves;
and detecting the position of the battery swap apparatus (300) according to the first distance and the second distance;
wherein determining the position of the battery swap apparatus (300) according to the first distance and the second distance comprises:
calculating a distance difference between the second distance and the first distance;
and determining whether the battery swap apparatus (300) is in a target position according to the distance difference.

2. The method according to claim 1, wherein the power transmission device (330) comprises a motor (335), the motor (335) is used to drive the battery swap apparatus (300) to move, and that acquiring, by means of the power transmission device (330), a second distance by which the battery swap apparatus (300) moves comprises:
determining the second distance by which the battery swap apparatus (300) moves according to the number of rotations of the motor (335);
or, wherein the power transmission device (330) comprises an encoder (334), the encoder (334) is used to determine the second distance, and that acquiring, by means of the power transmission device (330), a second distance by which the battery swap apparatus (300) moves comprises:
acquiring, from the encoder (334), the second distance by which the battery swap apparatus (300) moves.

3. The method according to claim 1 or 2, wherein the distance measuring device (320) is a laser type distance measuring device (320).

4. The method according to any one of claims 1 to 3, wherein that acquiring, from the distance measuring device (320), a first distance by which the battery swap apparatus (300) moves comprises:
with the battery swap apparatus (300) in a first position, acquiring, from the distance measuring device (320), the first distance by which the battery swap apparatus (300) moves, wherein the first position is a position where the battery swap apparatus (300) is after moving by the second distance from an initial position, and the initial position is a position where the power transmission device (330) starts to calculate the second distance;
optionally, wherein acquiring, from the distance measuring device (320), a first distance by which the battery swap apparatus (300) moves comprises:
with the battery swap apparatus (300) in the initial position, acquiring a first reference distance from the distance measuring device (320);
with the battery swap apparatus (300) in the first position, acquiring a second reference distance from the distance measuring device (320);
and determining the first distance according to the first reference distance and the second reference distance.

5. The method according to claim 1, wherein that determining whether the battery swap apparatus (300) is in a target position according to the distance difference comprises:
if a value of the distance difference is less than a first threshold, determining that the battery swap apparatus (300) is in the target position;
and if the value of the distance difference is greater than or equal to the first threshold, determining that the battery swap apparatus (300) is not in the target position.

6. The method according to claim 5, wherein if it is determined that the battery swap apparatus (300) is not in the target position, the method further comprises:
adjusting the position of the battery swap apparatus (300) according to the distance difference.

7. The method according to claim 6, wherein that adjusting the position of the battery swap apparatus (300) according to the distance difference comprises:
if the distance difference is a positive number, controlling the battery swap apparatus (300) to move by a third distance along a moving direction of the battery swap apparatus (300);
and if the distance difference is a negative number, controlling the battery swap apparatus (300) to move by the third distance along a moving direction facing away from the battery swap apparatus (300);
wherein the third distance is equal to the value of the distance difference.

8. The method according to any one of claims 2 to 7, wherein the power transmission device (330) comprises a variable frequency drive (333), the variable frequency drive (333) is used to control a motor (335), and the motor (335) is used to drive the battery swap apparatus (300) to move.

9. The method according to claim 8, wherein the number of the motor is at least two, and one variable frequency drive (333) is used to control the at least two motors (335).

10. The method according to claim 9, wherein the battery swap apparatus (300) is provided with at least two power transmission mechanisms, and each motor (335) of the at least two motors (335) is used to drive one of the power transmission mechanisms to cause the battery swap apparatus (300) to move.

11. The method according to any one of claims 1 to 10, wherein the battery swap apparatus (300) comprises a first moving mechanism (110), a second moving mechanism (120), and a third moving mechanism (130), and the first moving mechanism (110), the second moving mechanism (120), and the third moving mechanism (130) are used to control the battery swap apparatus (300) to move in three mutually perpendicular directions, respectively.

12. A battery swap apparatus (300), comprising:
a distance measuring device (320), the distance measuring device being used to measure a first distance by which the battery swap apparatus moves;
a controller (310), the controller being used to acquire the first distance from the distance measuring device; the controller being further used to determine a position of the battery swap apparatus according to the first distance;
a power transmission device (330), the power transmission device being used to record a second distance by which the battery swap apparatus moves;
wherein the controller is used to acquire the second distance by means of the power transmission device, and detect the position of the battery swap apparatus according to the first distance and the second distance;
wherein the controller is used to calculate a distance difference between the second distance and the first distance; and the controller is used to determine whether the battery swap apparatus is in a target position according to the distance difference.

13. A battery swap station (11), comprising:
the battery swap apparatus (300) according to claim 12.

## Patentansprüche

1. Verfahren zum Erkennen einer Position einer Batteriewechseleinrichtung (300), wobei die Batteriewechseleinrichtung (300) mit einer Entfernungsmessvorrichtung (320) versehen ist, und das Verfahren umfasst:
Erfassen, von der Entfernungsmessvorrichtung (320), einer ersten Entfernung, um die sich die Batteriewechseleinrichtung (300) bewegt;
und Bestimmen der Position der Batteriewechseleinrichtung (300) gemäß der ersten Entfernung;
wobei die Batteriewechseleinrichtung (300) ferner mit einer Leistungsübertragungsvorrichtung (330) versehen ist und das Verfahren ferner umfasst:
Erfassen, mittels der Leistungsübertragungsvorrichtung (330), einer zweiten Entfernung, um die sich die Batteriewechseleinrichtung (300) bewegt;
und Erkennen der Position der Batteriewechseleinrichtung (300) gemäß der ersten Entfernung und der zweiten Entfernung;
wobei das Bestimmen der Position der Batteriewechseleinrichtung (300) gemäß der ersten Entfernung und der zweiten Entfernung umfasst:
Berechnen einer Entfernungsdifferenz zwischen der zweiten Entfernung und der ersten Entfernung;
und Bestimmen, ob sich die Batteriewechseleinrichtung (300) in einer Zielposition gemäß der Entfernungsdifferenz befindet.

2. Verfahren nach Anspruch 1, wobei die Leistungsübertragungsvorrichtung (330) einen Motor (335) umfasst, der Motor (335) verwendet wird, um die Batteriewechseleinrichtung (300) zur Bewegung anzutreiben, und das Erfassen, mittels der Leistungsübertragungsvorrichtung (330), einer zweiten Entfernung, um die sich die Batteriewechseleinrichtung (300) bewegt, umfasst:
Bestimmen der zweiten Entfernung, um die sich die Batteriewechseleinrichtung (300) bewegt, gemäß der Anzahl der Umdrehungen des Motors (335);
oder, wobei die Leistungsübertragungsvorrichtung (330) einen Kodierer (334) umfasst, der Kodierer (334) verwendet wird, um die zweite Entfernung zu bestimmen, und das Erfassen, mittels der Leistungsübertragungsvorrichtung (330), einer zweiten Entfernung, um die sich die Batteriewechseleinrichtung (300) bewegt, umfasst:
Erfassen, durch den Kodierer (334), der zweiten Entfernung, um die sich die Batteriewechseleinrichtung (300) bewegt.

3. Verfahren nach Anspruch 1 oder 2, wobei die Entfernungsmessvorrichtung (320) eine Entfernungsmessvorrichtung (320) vom Lasertyp ist.

4. Verfahren nach einem der Ansprüche 1 bis 3, wobei das Erfassen, von der Entfernungsmessvorrichtung (320), einer ersten Entfernung, um die sich die Batteriewechseleinrichtung (300) bewegt, umfasst:
mit der Batteriewechseleinrichtung (300) in einer ersten Position, Erfassen, von der Entfernungsmessvorrichtung (320), der ersten Entfernung, um die sich die Batteriewechseleinrichtung (300) bewegt, wobei die erste Position eine Position ist, in der sich die Batteriewechseleinrichtung (300) befindet, nachdem sie sich um die zweite Entfernung von einer Ausgangsposition aus bewegt hat, und die Ausgangsposition eine Position ist, in der die Leistungsübertragungsvorrichtung (330) beginnt, die zweite Entfernung zu berechnen;
optional, wobei das Erfassen, von der Entfernungsmessvorrichtung (320), einer ersten Entfernung, um die sich die Batteriewechseleinrichtung (300) bewegt, umfasst:
mit der Batteriewechseleinrichtung (300) in der Ausgangsposition, Erfassen einer ersten Referenzentfernung von der Entfernungsmessvorrichtung (320);
mit der Batteriewechseleinrichtung (300) in der ersten Position, Erfassen einer zweiten Referenzentfernung von der Entfernungsmessvorrichtung (320);
und Bestimmen der ersten Entfernung gemäß der ersten Referenzentfernung und der zweiten Referenzentfernung.

5. Verfahren nach Anspruch 1, wobei das Bestimmen, ob sich die Batteriewechseleinrichtung (300) in einer Zielposition gemäß der Entfernungsdifferenz befindet, umfasst:
wenn ein Wert der Entfernungsdifferenz kleiner als ein erster Schwellenwert ist, Bestimmen, dass sich die Batteriewechseleinrichtung (300) in der Zielposition befindet;
und wenn der Wert der Entfernungsdifferenz größer oder gleich dem ersten Schwellenwert ist, Bestimmen, dass sich die Batteriewechseleinrichtung (300) nicht in der Zielposition befindet.

6. Verfahren nach Anspruch 5, wobei, wenn bestimmt wird, dass sich die Batteriewechseleinrichtung (300) nicht in der Zielposition befindet, das Verfahren ferner umfasst:
Anpassen der Position der Batteriewechseleinrichtung (300) gemäß der Entfernungsdifferenz.

7. Verfahren nach Anspruch 6, wobei das Anpassen der Position der Batteriewechseleinrichtung (300) gemäß der Entfernungsdifferenz umfasst:
wenn die Entfernungsdifferenz eine positive Zahl ist, Steuern der Batteriewechseleinrichtung (300), um sich um eine dritte Entfernung entlang einer Bewegungsrichtung der Batteriewechseleinrichtung (300) zu bewegen;
und wenn die Entfernungsdifferenz eine negative Zahl ist, Steuern der Batteriewechseleinrichtung (300), um sich um die dritte Entfernung entlang einer Bewegungsrichtung zu bewegen, die von der Batteriewechseleinrichtung (300) weg weist;
wobei die dritte Entfernung gleich dem Wert der Entfernungsdifferenz ist.

8. Verfahren nach einem der Ansprüche 2 bis 7, wobei die Leistungsübertragungsvorrichtung (330) einen frequenzvariablen Antrieb (333) umfasst, der frequenzvariable Antrieb (333) verwendet wird, um einen Motor (335) zu steuern, und der Motor (335) dazu verwendet wird, die Batteriewechseleinrichtung (300) zur Bewegung anzutreiben.

9. Verfahren nach Anspruch 8, wobei die Anzahl der Motoren mindestens zwei beträgt und ein frequenzvariabler Antrieb (333) verwendet wird, die mindestens zwei Motoren (335) zu steuern.

10. Verfahren nach Anspruch 9, wobei die Batteriewechseleinrichtung (300) mit mindestens zwei Kraftübertragungsmechanismen versehen ist und jeder Motor (335) der mindestens zwei Motoren (335) verwendet wird, um einen der Kraftübertragungsmechanismen anzutreiben, um zu bewirken, dass sich die Batteriewechseleinrichtung (300) bewegt.

11. Verfahren nach einem der Ansprüche 1 bis 10, wobei die Batteriewechseleinrichtung (300) einen ersten Bewegungsmechanismus (110), einen zweiten Bewegungsmechanismus (120) und einen dritten Bewegungsmechanismus (130) umfasst und der erste Bewegungsmechanismus (110), der zweite Bewegungsmechanismus (120) und der dritte Bewegungsmechanismus (130) dazu verwendet werden, die Batteriewechseleinrichtung (300) so zu steuern, dass sie sich jeweils in drei zueinander senkrechte Richtungen bewegt.

12. Batteriewechseleinrichtung (300), umfassend:
eine Entfernungsmessvorrichtung (320),
wobei die Entfernungsmessvorrichtung verwendet wird, um eine erste Entfernung zu messen, um die sich die Batteriewechseleinrichtung bewegt;
eine Steuerung (310), wobei die Steuerung verwendet wird, um die erste Entfernung von der Entfernungsmessvorrichtung zu erfassen; wobei die Steuerung ferner verwendet wird, um eine Position der Batteriewechseleinrichtung gemäß der ersten Entfernung zu bestimmen;
eine Leistungsübertragungsvorrichtung (330), wobei die Leistungsübertragungsvorrichtung verwendet wird, um eine zweite Entfernung zu erfassen, um die sich die Batteriewechseleinrichtung bewegt;
wobei die Steuerung dazu verwendet wird, die zweite Entfernung mittels der Leistungsübertragungsvorrichtung zu erfassen und die Position der Batteriewechseleinrichtung gemäß der ersten Entfernung und der zweiten Entfernung zu erkennen;
wobei die Steuerung verwendet wird, um eine Entfernungsdifferenz zwischen der zweiten Entfernung und der ersten Entfernung zu berechnen; und die Steuerung verwendet wird, um zu bestimmen, ob sich die Batteriewechseleinrichtung in einer Zielposition gemäß der Entfernungsdifferenz befindet.

13. Batteriewechselstation (11), umfassend:
die Batteriewechseleinrichtung (300) nach Anspruch 12.

## Revendications

1. Procédé de détection d'une position d'un appareil de permutation de batteries (300), l'appareil de permutation de batteries (300) étant pourvu d'un dispositif de mesure de distance (320), et le procédé comprenant les étapes consistant à :
acquérir, depuis le dispositif de mesure de distance (320), une première distance sur laquelle l'appareil de permutation de batteries (300) se déplace ;
et déterminer la position de l'appareil de permutation de batteries (300) en fonction de la première distance ;
l'appareil de permutation de batteries (300) étant en outre pourvu d'un dispositif de transmission d'énergie (330), et le procédé comprenant en outre les étapes consistant à :
acquérir, au moyen du dispositif de transmission d'énergie (330), une deuxième distance sur laquelle l'appareil de permutation de batteries (300) se déplace ;
et détecter la position de l'appareil de permutation de batteries (300) en fonction de la première distance et de la deuxième distance ;
la détermination de la position de l'appareil de permutation de batteries (300) en fonction de la première distance et de la deuxième distance comprenant les étapes consistant à :
calculer une différence de distance entre la deuxième distance et la première distance ;
et déterminer si l'appareil de permutation de batteries (300) se trouve à une position cible en fonction de la différence de distance.

2. Procédé selon la revendication 1, dans lequel le dispositif de transmission d'énergie (330) comprend un moteur (335), le moteur (335) est utilisé pour amener l'appareil de permutation de batteries (300) à se déplacer, et l'acquisition, au moyen du dispositif de transmission d'énergie (330), d'une deuxième distance sur laquelle l'appareil de permutation de batteries (300) se déplace comprend les étapes consistant à :
déterminer la deuxième distance sur laquelle l'appareil de permutation de batteries (300) se déplace en fonction du nombre de rotations du moteur (335) ;
ou, dans lequel le dispositif de transmission d'énergie (330) comprend un encodeur (334), l'encodeur (334) est utilisé pour déterminer la deuxième distance, et l'acquisition, au moyen du dispositif de transmission d'énergie (330), d'une deuxième distance sur laquelle l'appareil de permutation de batteries (300) se déplace comprend les étapes consistant à :
acquérir, depuis l'encodeur (334), une deuxième distance sur laquelle l'appareil de permutation de batteries (300) se déplace.

3. Procédé selon la revendication 1 ou 2, dans lequel le dispositif de mesure de distance (320) est un dispositif de mesure de distance (320) de type laser.

4. Procédé selon l'une quelconque des revendications 1 à 3, dans lequel l'acquisition, depuis le dispositif de mesure de distance (320), d'une première distance sur laquelle l'appareil de permutation de batteries (300) se déplace comprend les étapes consistant à :
avec l'appareil de permutation de batteries (300) dans une première position, acquérir, depuis le dispositif de mesure de distance (320), la première distance sur laquelle l'appareil de permutation de batteries (300) se déplace, la première position étant une position où l'appareil de permutation de batteries (300) se trouve après s'être déplacé de la deuxième distance depuis une position initiale, et la position initiale est une position où le dispositif de transmission d'énergie (330) commence à calculer la deuxième distance ;
éventuellement, dans lequel l'acquisition, depuis le dispositif de mesure de distance (320), d'une première distance sur laquelle l'appareil de permutation de batteries (300) se déplace comprenant les étapes consistant à :
avec l'appareil de permutation de batteries (300) dans la position initiale, acquérir une première distance de référence depuis le dispositif de mesure de distance (320) ;
avec l'appareil de permutation de batteries (300) dans la première position, acquérir une deuxième distance de référence depuis le dispositif de mesure de distance (320) ;
et déterminer la première distance en fonction de la première distance de référence et la deuxième distance de référence.

5. Procédé selon la revendication 1, dans lequel l'étape consistant à déterminer si l'appareil de permutation de batteries (300) se trouve à une position cible en fonction de la différence de distance comprend les étapes consistant à :
si une valeur de la différence de distance est inférieure à un premier seuil, déterminer que l'appareil de permutation de batteries (300) se trouve à la position cible ;
et si la valeur de la différence de distance est supérieure ou égale au premier seuil, déterminer que l'appareil de permutation de batteries (300) ne se trouve pas à la position cible.

6. Procédé selon la revendication 5, dans lequel s'il est déterminé que l'appareil de permutation de batteries (300) ne se trouve pas à la position cible, le procédé comprend en outre l'étape consistant à :
ajuster la position de l'appareil de permutation de batteries (300) en fonction de la différence de distance.

7. Procédé selon la revendication 6, dans lequel l'étape consistant à ajuster la position de l'appareil de permutation de batteries (300) en fonction de la différence de distance comprend les étapes consistant à :
si la différence de distance est un nombre positif, commander l'appareil de permutation de batteries (300) afin qu'il se déplace sur une troisième distance le long d'une direction de déplacement de l'appareil de permutation de batteries (300) ;
et si la différence de distance est un nombre négatif, commander l'appareil de permutation de batteries (300) afin qu'il se déplace sur la troisième distance le long d'une direction de déplacement opposée à l'appareil de permutation de batteries (300) ;
la troisième distance étant égale à la valeur de la différence de distance.

8. Procédé selon l'une quelconque des revendications 2 à 7, dans lequel le dispositif de transmission d'énergie (330) comprend un entraînement à fréquence variable (333), l'entraînement à fréquence variable (333) est utilisé pour commander un moteur (335), et le moteur (335) est utilisé pour amener l'appareil de permutation de batteries (300) à se déplacer.

9. Procédé selon la revendication 8, dans lequel le nombre de moteurs est d'au moins deux, et un entraînement à fréquence variable (333) est utilisé pour commander lesdits au moins deux moteurs (335).

10. Procédé selon la revendication 9, dans lequel l'appareil de permutation de batteries (300) est pourvu d'au moins deux mécanismes de transmission d'énergie, et chaque moteur (335) parmi les au moins deux moteurs (335) est utilisé pour amener un des mécanismes de transmission d'énergie à provoquer un déplacement de l'appareil de permutation de batteries (300).

11. Procédé selon l'une quelconque des revendications 1 à 10, dans lequel l'appareil de permutation de batteries (300) comprend un premier mécanisme de déplacement (110), un deuxième mécanisme de déplacement (120), et un troisième mécanisme de déplacement (130), et le premier mécanisme de déplacement (110), le deuxième mécanisme de déplacement (120) et le troisième mécanisme de déplacement (130) sont utilisés pour commander un déplacement de l'appareil de permutation de batteries (300) dans trois directions mutuellement perpendiculaires, respectivement.

12. Appareil de permutation de batteries (300), comprenant :
un dispositif de mesure de distance (320), le dispositif de mesure de distance étant utilisé pour mesurer une première distance sur laquelle l'appareil de permutation de batteries se déplace ;
un dispositif de commande (310), le dispositif de commande étant utilisé pour acquérir la première distance depuis le dispositif de mesure de distance ; le dispositif de commande étant en outre utilisé pour déterminer une position de l'appareil de permutation de batteries en fonction de la première distance ;
un dispositif de transmission d'énergie (330), le dispositif de transmission d'énergie étant utilisé pour enregistrer une deuxième distance sur laquelle l'appareil de permutation de batteries se déplace ;
le dispositif de commande étant utilisé pour acquérir la deuxième distance au moyen du dispositif de transmission d'énergie, et détecter la position de l'appareil de permutation de batteries en fonction de la première distance et de la deuxième distance ;
le dispositif de commande étant utilisé pour calculer une différence de distance entre la deuxième distance et la première distance ; et le dispositif de commande étant utilisé pour déterminer si l'appareil de permutation de batteries se trouve à une position cible en fonction de la différence de distance.

13. Station de permutation de batteries (11), comprenant :
l'appareil de permutation de batteries (300) selon la revendication 12.
